# EUROPEAN PATENT APPLICATION

(11) **EP 2 998 607 A1**
(43) Date of publication of application: **23.03.2016**
(21) Application number: 14185036.2
(22) Date of filing: 16.09.2014
(51) Int. Cl.: F16D 65/56, B60T 17/22, F16D 66/00

(54) **Method and system for setting a braking component running clearnace**

(71) Applicant: Meritor Heavy Vehicle Braking Systems (UK) Limited, Cwmbran, Gwent NP44 3XU (GB)
(72) Inventor: Narula, Prashant, Cwmbran, Gwent NP44 3XU (GB); Roberts, Paul, Cwmbran, Gwent NP44 3XU (GB); Knoop, Dietmar, Cwmbran, Gwent NP44 3XU (GB)
(74) Representative: Jones, John Bryn

(57) **Abstract**

A method of setting a running clearance between a friction element of a braking system and a corresponding friction surface of the braking system. The method comprises monitoring a signal indicative of a load on an actuator to detect a peak in the signal, indicative of a point of zero running clearance being reached. The actuator is retracted to set the running clearance. A braking system, controller for a braking system and software for a controller for a braking system are all disclosed, for carrying out the disclosed methods.

## Description

### FIELD OF THE INVENTION

The present invention relates to methods of adjusting a braking system after replacement of components of the braking system. The invention further relates to a duly configured braking system, controller and software for the controller. In particular, the invention relates to methods and systems for permitting more efficient and reliable replacement of friction elements in a braking system.

### BACKGROUND OF THE INVENTION

Certain components of brakes have a usable life, following which they must be replaced. Brake pads and brake shoes include friction material which progressively wears away as the brake is used. Electromechanical wear sensors are known which can determine the amount of friction material wear and provide an indication to an operator that the brake pads or shoes require replacement. Also certain components of brakes have a fatigue life. Components made from certain materials (for example steel) to which a load is repeatedly applied and then released can "fatigue" whereby fatigue cracks develop within the component. There comes a point when the fatigue cracks are sufficiently large that the component may fail completely.

Maintenance cycles and an expected useful life for components of a braking system are generally tested and specified based upon components of a known quality and known materials. Certain aspects of system performance can depend upon a predefined running clearance being provided between a friction element and a component with which it engages to create a braking force, such as a rotor of the braking system. The running clearance can affect the speed with which brakes engage when actuated and if too small or zero, can result in overheating of the brakes due to excessive heat generation from friction as the rotor rotates. Setting a suitable running clearance in a braking system after maintenance is therefore important, but can also be time consuming resulting in a cost in time and in labour. The present invention sets out to address these problems.

### SUMMARY OF THE INVENTION

A first aspect of the invention provides a method of setting a running clearance between a friction element of a braking system and a corresponding friction surface of the braking system, comprising the steps of:
causing an actuator to advance the friction element toward the friction surface;
monitoring, in a controller, a signal indicative of a load on the actuator, to detect a peak in the signal indicative of a point of zero running clearance between the friction element and the friction surface; and
retracting the actuator by a predetermined distance.

The actuator may be an electric motor. The signal indicative of the load on the actuator may be a current provided to the motor.

The method may comprise detecting a first peak in the signal upon actuation of the actuator and/or detecting a second peak in the signal indicative of the point of zero running clearance between the friction element and the friction surface.

The method may comprise detecting a peak in the signal and determining the peak as not being indicative of a point of zero running clearance between the friction element and the friction surface.

The method may comprise reading the signal to determine whether a point of zero running clearance has been reached before carrying out the steps for setting the running clearance.

The method may comprise retracting the actuator to permit removal and/or replacement of a friction element, preferably before carrying out the steps for setting the running clearance.

The method may further comprise any or all of the steps of:
monitoring the signal as a first signal;
monitoring a second signal, indicative of a position of the actuator; and
recording that a first signal peak has occurred once it is determined that:
   the first signal reaches a value greater than a first threshold value;
   the actuator is determined to be moving, via the second signal; and
   after a predetermined time threshold, the signal is less than the first threshold value and greater than a second threshold value.

The method may further comprise any or all of the steps of:
monitoring the signal as a first signal;
monitoring a second signal, indicative of a position of the actuator; and
recording that a second peak has occurred once it is determined that:
   the first signal is less than a first threshold value and more than a second threshold value, lower than the first threshold value;
   the actuator is determined not to be moving via the second signal;
   the first signal is determined to be more than a further threshold value after a predetermined time threshold; and
   the first peak is preferably determined to have already occurred.

The method may further comprise the step of setting a recorded running clearance to a base value, preferably zero; and
setting a recorded actuator position to a base value, preferably zero.

The method may further comprise causing the actuator to retract by a first distance sufficient to allow removal of a friction element.

The method may further comprise causing the actuator to retract by a second distance sufficient to allow replacement of a worn friction element with an unworn friction element.

The method may further comprise causing the actuator to retract by a third distance set as an operating running clearance of the brake system.

The step of causing the actuator to retract may be carried out after the running clearance and actuator position have been set to their respective base values.

The braking system may comprise a first actuator for applying the brake and a second actuator for adjusting a clearance of the brake. The method may comprise monitoring a signal indicative of a load on the second actuator.

The invention further provides a method of maintenance of a braking system, comprising the steps of removing and/or installing a friction element in a braking system and causing a controller to carry out the described method to set the running clearance.

The method may further comprise installing the friction element in the braking system to replace a used or worn component or friction element of the system.

The method may further comprise connecting an electronic diagnostic device to the braking system. This allows the system to be expanded to include data processing means for carrying out the running distance setting method only when necessary, for example for maintenance or repair.

The connection may be via a CAN bus of a vehicle or machinery comprising the braking system. Connection via a CAN bus allows simple integration and communication via existing systems of the braking system, vehicle or machinery.

An electronic diagnostic device may comprise the controller. This further allows processing and data management means to only be included in the system when maintenance or repair is necessary and limits the carrying out of calibration steps to parties having the correct diagnostic equipment and, for example the necessary associated training for improved quality and safety of the maintenance or repair operation.

A further aspect of the invention provides a controller configured to carry out the steps for setting the running clearance of the brake system.

A further aspect of the invention provides a computer program product comprising instructions which, when executed by a controller, cause the controller to perform some or all of any of the method steps of the invention.

In a further aspect, a controller may be arranged for connection to a braking system, the controller comprising a processor and a memory containing a computer program product for carrying out method steps of the invention.

A still further aspect of the invention provides a braking system comprising a controller arranged to carry out method steps of the invention and a braking assembly, the braking assembly comprising an actuator for adjusting a running clearance of the braking system, the controller being arranged to carry out the method of the invention for setting the running clearance.

The controller of the system may be comprised in an electronic diagnostic device arranged to be attached to a vehicle or machinery comprising the braking system, for maintenance purposes.

The controller of the system may alternatively be an integral part of the braking system.

The actuator for applying the brakes may be a mechanically operated actuator. The actuator for an adjuster mechanism of the braking system may be electrically operated.

The braking system may include an electrically operated clearance control system for maintaining a desired running clearance, during operation, between a rotor and a friction surface of a brake pad or brake shoe. The braking system may include a service brake or a parking brake.

### BRIEF DESCRIPTION OF THE DRAWINGS

Embodiments of the invention will now be described with reference to the accompanying drawings, in which:
Figure 1 shows a schematic view of a brake according to the present invention,
Figures 2 and 3 show how the brake force, actuating lever speed and actuating lever position of the brake of Figure 1 vary with time during a brake application, and
Figure 4 shows how the actuating lever speed of the brake of figure 1 can vary with time during a brake application and subsequent release.
Figure 5 shows a schematic representation of an external electronic device of the invention connected to a system of the invention.
Figure 6 shows a flow chart relating to a mechanical method of adjusting a running clearance.
Figure 7 shows a trace of a signal indicative of a load on an actuator for setting the running clearance of a braking system.
Figure 8 shows a flow chart of a method according to the invention.

### DETAILED DESCRIPTION OF EMBODIMENT(S)

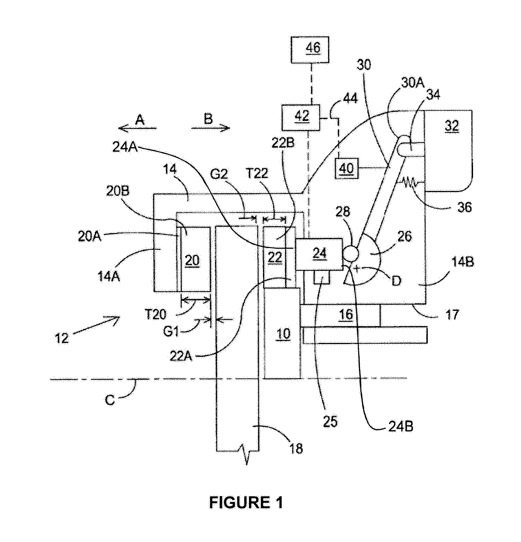

Figures 1 to 4 and the following description thereof describe a braking system, a method of determining a zero instantaneous running clearance position of a brake of a braking system and methods for controlling the removal and replacement of a brake pad, which may be carried out using parts of the braking system used for managing a zero instantaneous running clearance position of a brake.

In this case the brake 12 is a service brake, i.e. a brake that is used to slow the vehicle down. The brake 12 may also be used as a parking brake, i.e. a brake used when the vehicle is stationary to prevent the vehicle moving.

With reference to Fig. 1 there is shown a vehicle 10 having a brake 12. The brake 12 includes a caliper 14 which is slidably mounted via pin 16 on the vehicle 10, typically on a suspension component of the vehicle 10. Accordingly the caliper 14 can move in the direction of arrow A and in the direction of arrow B.

The vehicle 10 includes a brake rotor, in this case a brake disc 18 which is rotatably mounted about axis C. The brake disc 18 is rotatably connected to a wheel (not shown) which also rotates about axis C.

Brake pad 20 includes a brake pad back plate 20A and friction material 20B. Brake pad 22 includes a brake pad back plate 22A and friction material 22B.

On opposite axial sides of the brake disc there are brake pads 20 and 22. Adjacent brake pad 22 is an adjuster mechanism 24. An actuation shaft (or operating shaft) 26 is mounted in the caliper 14 and is rotatable about axis D. A roller 28 is supported on the actuation shaft 26 and engages a right hand end (when viewing Figure 1) of the adjuster mechanism 24.

Operating lever 30 is attached to the actuating shaft 26. An actuator 32 is mounted on the caliper 14, and includes an actuator rod 34, which engages an end 30A of the actuating lever 30.

The actuator 32 is a mechanically operated actuator, in this case an air operated actuator. The actuator 32 may alternatively be an electrically operated actuator or any non-electrically operated actuator.

As shown in Figure 1 the brakes are in a released condition, operating lever 30 having being rotated clockwise about axis D such that a gap G1 exists between brake pad 20 and brake disc 18 and a gap G2 exists between brake pad 22 and brake disc 18. Accordingly, the released running clearance is G1 + G2.

In order to apply the brakes, the actuator 32 is operated such that the actuator rod extends from the actuator and moves in a direction of arrow A thereby rotating the operating shaft 26 anti-clockwise about axis D. Because the roller 28 is offset from axis D, the roller 28 moves in the direction of arrow A which causes the adjustment mechanism 24 to move in a direction of A which forces the brake pad 22 in the direction of arrow A, thereby closing the gap G2. Continued anti-clockwise rotation of the operating shaft 26 then causes the caliper 14 to move in the direction of arrow B as the hole 17 in the caliper slides on pin 16. This causes gap G1 to close. At this point the instantaneous running clearance is zero but, because the brake pads are not being forced against the brake disc 18, no braking force exists to retard or to slow the vehicle. Only when the actuator 32 continues to move the actuator rod 34 in the direction of arrow A, does a clamping force of the brake pads on the discs start to be generated. The clamping (or braking) force is dependent upon, amongst other things, the force in the actuating rod 34, a higher force actuating rod 34 resulting in a higher clamping force and therefore a higher retardation of the vehicle. As the force in actuator rod 34 increases, the elasticity in the various brake components allows for the actuator rod to continue to extend from the actuator and continue to move in the direction of arrow A relative to the actuator, in spite of the fact that the brake pads 20 and 22 are in engagement with the brake disc 18. By way of example, if the brake force is increased, the caliper 14 will start to deflect with the side 14a progressively moving further away from side 14b. Clearly other brake components will deflect as the brake force increases.

By way of example, if the released running clearance as shown in Figure 1 is 1 mm (e.g. G1 = 0.5 mm and G2 = 0.5 mm) and the operating ratio of the operating shaft 26 is approximately 20:1, (i.e. for 20 mm movement in end 30A in the direction of arrow A, roller 28 moves 1 mm in the direction of arrow A), then to reduce the instantaneous running clearance to zero requires end 30A to move 20 mm in the direction of arrow A. However, at this point the brakes are not applied. In order to apply the brake end 30A must continue to be moved in the direction of arrow A relative to the actuator 32 and, by way of example, for the brake to be applied relatively heavily, end 30A must extend a further 20 mm, i.e. a total of 40 mm. This 40 mm movement of end 30A causes a roller 28 to "move" total of 2 mm, 1 mm of which closes gaps G1 and G2 and the other 1 mm of which is absorbed in the elasticity of the various components.

The adjuster mechanism 24 is electrically operated by electric motor 25. Thus the adjuster mechanism 24 can be extended (or lengthened) (such that end 24A moves away from end 24B) or retracted (or shortened) (such that end 24A moves towards end 24B) by operation of the electric motor 25. It will be appreciated that by extending the adjuster mechanism 24 the released running clearance will reduce and by retracting (or shortening) the adjuster mechanism 24 the released running clearance will increase.

As will be appreciated, the adjuster mechanism 24 is a distinct component from the actuator 32. The actuator 32 performs the function of applying and releasing the brake. The adjuster mechanism 24 performs the function of adjusting (in particular the running clearance) of the brake. The adjuster mechanism is not used to apply the brake. The actuator mechanism is not used to adjust the running clearance of the brake. The actuator 32 is an air operated actuator though other types of mechanical actuator may be used. The adjuster mechanism 24 is electrically operated, i.e. in order to adjust the adjuster mechanism the electric motor 25 must be operated. Adjuster mechanism 24 may take the form of an extendable piston.

The vehicle 10 includes a sensor 40 and a processor 42, in one embodiment a microprocessor. There is also included a memory 46 such as data storage, such as flash memory.

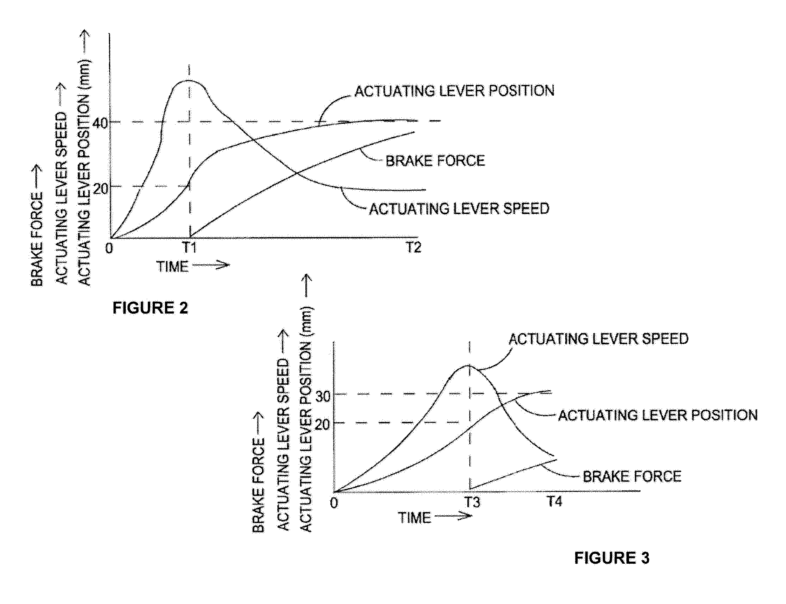

The sensor 40 in this case is a position sensor and senses the position of the actuating lever 30. The sensor 40 together with the processor 42 and memory 44 can be used to determine the rest position of the actuating lever 30 (as shown in Figure 1) and can also be used to determine when the instantaneous running clearance has reduced to zero (but the brakes are not applied). As is will be apparent from the following description of Figures 2 to 4, the absolute sizes, and any difference in size, of the gaps G1 and G2 can influence the performance of the braking system and so correct calibration of these gaps, either during maintenance or operation, or particularly after replacement of components of the braking system, can be important to the performance of the system in operation.

Consider the situation where the vehicle operator applies the brakes heavily. Using the example above, the actuator rod 34 will have moved 40 mm in the direction of arrow A. During the first 20 mm of movement all that occurs is that gap G2 closes and the caliper moves in the direction of arrow B such that gap G1 closes. At this moment, no braking force has yet been applied since the force required to, for example, slide the hole 17 along pin 16 is relatively low and thus the actuator rod 34 moves relatively quickly during its first 20 mm of movement. However, during the second 20 mm of "extension" of rod 34 the clamping force progressively increases and therefore the force required to move end 30A through the final 20 mm of movement increases considerably. This results in the actuator rod 34 extending more slowly over the second 20 mm of movement than over the first 20 mm of movement. By utilizing the sensor 40 to monitor the position of the actuating lever as the brake is applied, it is possible to determine when the instantaneous running clearance reduces to zero. The sensor 40 can also determine the rest position of the actuating lever 30. Knowing the rest position of the actuator lever 30 and the position of the actuating lever 30 when the instantaneous running clearance is zero enables the released running clearance to be determined.

In more detail, with reference to Fig. 2 there is shown the position of the end 30A of the actuating lever 30 plotted against time as the vehicle operator demands a heavy braking force. The actuating lever position is sensed by sensor 40. Also shown on Fig. 2 is the actuating lever speed over the same time period and the brake clamp force over the same time period. The following sets out how analysis of this curve can be used to control clearance between brake pad or shoe and brake disc or drum.

At time T₀ the actuating lever is positioned as shown in Fig. 1 in the rest condition. This is taken as zero displacement. Because there is an air gap G1, G2, then the brake force is zero. The actuating lever is stationary, and the actuating lever speed is zero.

At time T₀ the vehicle operator applies the brakes which causes the actuator 32 to move the actuator rod 34 in the direction of arrow A. The characteristics of the brake are such that the end 30A of the actuating lever moves as shown on Figure 2. Since the actuating lever position with respect to time is known, then it is possible to determine the actuating lever speed with respect to time. This has been plotted on Fig. 2. Significantly at time T₁ the actuating lever speed has reached a maximum, following which the speed decreases. This maximum speed coincides with the moment when the instantaneous running clearance has reduced to zero. Immediately after this time a clamping force begins to be generated which tends to slow down the speed of actuating lever. At time T₂ the actuator rod 34 has extended 40 mm and the actuating lever speed is relatively slower when compared with the peak at time T₁. At time T₂ the brake force is relatively high.

With reference to Figure 3 there is shown a plot of actuating lever speed, actuating lever position, and brake force with respect to time wherein the vehicle operator has applied the brake relatively slowly and relatively lightly. Under these circumstances it has taken time T₃ for the instantaneous running clearance to close to zero. It will be appreciated that the brake has been applied relatively lightly since the maximum displacement of the actuator rod 34 is only 30 mm at time T₄. Nevertheless, it will be appreciated that Figure 3 shows similar characteristics, namely that at the point of maximum lever speed, the instantaneous running clearance has reduced to zero. After this time a clamp force starts to be generated.

Thus, when a new brake has been designed, it may be fitted to a test vehicle and fitted with various instrumentation including, for example, a position sensor monitoring the position of a particular component of the brake assembly, and also a force sensor to measure the clamping force for the caliper. The test vehicle will then be driven and braked under various circumstances. Analysis of the data may show that at or near the zero instantaneous running clearance position of the brake component (as determined by the force sensor), the measured parameter may have a particular characteristic. In the example above, the measured parameter was velocity and the characteristic of the velocity that the point when the brake reached a zero instantaneous running clearance was a peak in the velocity. Understanding how a particular characteristic of a measured parameter relates to a zero instantaneous running clearance position of the brake allows subsequent vehicles (such as production vehicles) which monitor the same parameter, but which do not include a force sensor, be able to determine the zero instantaneous running clearance position of the brake from the measured parameter alone.

In the example above, a peak in the velocity profile of component 30 is a characteristic of the parameter (velocity) which is known (as a result of testing) to be indicative of a zero instantaneous running clearance position of the brake. Subsequent vehicles (such as production vehicles) fitted with a similar brake and with sensor 40, but without any force sensor can determine the zero instantaneous running clearance position of the brake by determining the position of the brake when the parameter (velocity of component 30) has a characteristic (a velocity peak) that is indicative of a zero instantaneous running clearance. This can be carried out by comparing the monitored (or measured) velocity peak with the predetermined characteristic (as measured on the test vehicle). If the measured velocity peak is of a similar profile to the predetermined velocity peak, then the system can determine that the measured velocity peak is indeed indicative of a zero instantaneous running clearance position of the brake. However, under other circumstances, a velocity peak may be produced which is not indicative of zero instantaneous running clearance position of the brake. Under these circumstances the velocity peak can be compared with the predetermined velocity peaks and where they are not sufficiently similar the system can determine that the measured velocity peak was not indicative of a zero instantaneous running clearance position of the brake and therefore ignore this particular velocity peak for the purposes of running clearance adjustment.

As will be appreciated, since it is possible to determine the point of zero instantaneous running clearance by monitoring a single parameter of the brake, only one sensor is required.

Once it is possible to determine the point of zero instantaneous running clearance then it is possible to determine an actual released running clearance. If that actual released running clearance differs from a desired running clearance, then the adjustment mechanism can be adjusted (either by being lengthened or shortened) in order to adjust the actual released running clearance to the desired released running clearance. As will be appreciated, if wear of friction material has taken place then the adjustment mechanism can be adjusted by being lengthened to compensate for the wear. Alternatively if the brake has become hot through use, then under these circumstances the actual running clearance may decrease. As such, the adjustment mechanism can be adjusted by being shortened in order to increase the actual running clearance to nearer the desired running clearance. Clearly once the brake has cooled, then the adjustment mechanism can again be adjusted by being lengthened to compensate for the now cool brake.

As mentioned above, when the brake is applied, a peak velocity of end 30A coincides with a zero instantaneous running clearance condition. A zero instantaneous running clearance condition can also be determined during brake release. Thus, consider the situation where the brake has been applied relatively heavily. Brake components are under considerable load and they will have elastically deformed. Upon release of the brake, the stored elastic energy in the caliper etc is released and the brake releases to a zero instantaneous running clearance condition relatively quickly. Once at the zero instantaneous running clearance condition, the only forces acting on the actuating lever 30 are relatively light return spring forces designed into the brake to return the actuating lever 30 to the position shown in Figure 1. Tension spring 36 is a diagrammatical representation of a return spring. Thus, a sudden reduction in the speed of the actuating lever 30 substantially coincides with the point at which the instantaneous running clearance is zero and no braking force.

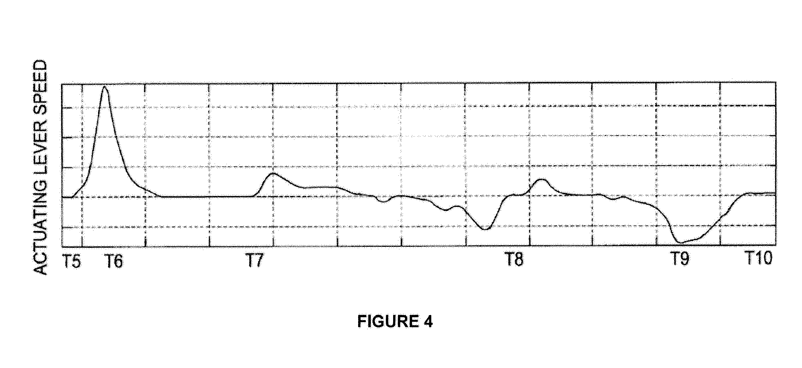

Figure 4 shows a plot of the actuating lever speed of brake 12 plotted against time during an application and release of the brake. The sequence of events that occurs is as follows:-

Prior to time T₅ the brake is in an off condition.

At time T₅ the operator starts to apply brake at a reasonably hard pressure.

The peak in the graph at time T₆ is an indication that the brake is near a zero instantaneous running clearance position.

Between time T₆ and T₇ the brake pressure is maintained at a reasonably hard pressure.

Between time T₇ and T₈ the brake pressure is progressively increased to a very hard pressure and then progressively decreased to a reasonably hard pressure.

Between time T₈ and T₉ the brake pressure is gradually increased then relatively quickly decreased.

The trough in the graph at time T₉ is an indication that the brake is near a zero instantaneous running clearance position during release.

At time T₁₀ the brake is fully released.

The prior application published as EP2650556, filed on 13 March 2013 contains further description of methods for determination of the zero instantaneous running clearance position of a brake and for determining the estimated remaining life of a brake component.

As can be appreciated from that disclosure, an electrically operated clearance control system is able to perform two functions, firstly it is able to maintain a desired running clearance between the rotor and a friction surface of the brake pad or brake shoe. Secondly, it is able to act as a wear indicator. As such, the requirement for a separate wear indicator is no longer required and accordingly the cost and space requirement of such a separate mechanical or electro-mechanical wear indicator are no longer incurred.

The system is described with respect to the electrically operated clearance control system as shown in figures 1 to 4 which monitors a single parameter of a brake component in order to determine the zero instantaneous running clearance position and from that ultimately determine when the running clearance is to be adjusted, and from that determine when the brake pads require replacing. It will be appreciated that any prior art electrically operated clearance control system could be used to determine if any usable life remains in a brake component, such as a brake pad, a brake shoe, a brake disc, a brake drum etc.

It is not essential to have an electrically operated clearance control system. Provided a total number of brake events can be determined, then the processor can determine if any usable life remains in a brake component without the need for any electrically (or mechanically) operated clearance control system. The system described is also capable of determining if any usable fatigue life remains in a brake component. By way of example, consider the actuating lever 30. It is assumed, for example, that actuating lever 30 has a fatigue limit. Throughout the life of the vehicle 10 the brake 12 will be applied typically many hundreds of thousands of times. Each application and release of the brake constitutes one fatigue cycle and in particular for the present example one fatigue cycle of actuating lever 30.

The processor 43 in conjunction with memory 46 may "count" the number of fatigue cycles. Thus, the processor could count the number of times the brake is applied, this being a good indication of a fatigue cycle, i.e. an application and release of the brake.

For ease of explanation, a released running clearance can be described as the sum of the gap between each pad and its associated surface of the brake disc. Under some circumstances a gap can appear between brake pad 20 and that part of caliper 14 which the brake pad engages when the brake is on. Furthermore, a gap can appear between brake pad 22 and that part of the adjuster mechanism 24 which the pad engages when the brake is on. The released running clearance is the sum of gaps G1, G2, any gap existing between pad 20 and caliper 14 and any gap existing between pad 22 and adjuster mechanism 24.

The sensor 40 is a linear sensor. Any type of position sensor could be used including rotary sensors. As shown in Figure 1, the position of the actuating lever 30 is sensed by sensor 40 and in other embodiments any other component of the brake could be sensed. As mentioned above, sensor 40 is a position sensor and in other embodiments velocity sensors or accelerometers could be used to sense the velocity or acceleration of any brake component. This is possible, since knowing the change of displacement over time allows calculation of velocity and acceleration and similarly knowing the change in speed over time allows calculation of position and acceleration, and similarly knowing change of acceleration over time allows calculation of position and speed. This can be applied to monitoring for a running clearance of the brake, monitoring for a number of fatigue cycles, or for determining whether a braking component has been properly released for replacement or not.

Different embodiments of brakes will have different characteristics, for example the elasticity of components of one embodiment may be different to the elasticity of equivalent components of a second embodiment. A desired released running clearance of one embodiment may be different to a desired released running clearance of another embodiment. Accordingly, a particular embodiment of a brake may be tested to determine the operating characteristics both during application of the brake and during release of the brake. Testing may be carried out at different application rates and different release rates. Testing may be carried out with different release running clearances. Testing may be carried out at different brake temperatures. Testing may be carried out when the brake is new and also when the brake is old. Once testing has been completed for a particular embodiment, the operating characteristics will be known. It will then be possible to programme processor 42 with certain characteristics (or functions) relating to the tested brake. When the brake is applied sensor 40 sends a signal (via line 44) to processor 42, this signal will be compared with the predetermined function to determine the actual released running clearance. Processor 42 can compare the actual released running clearance with the desired released running clearance. Any difference between the actual released running clearance and the desired released running clearance can then be corrected by processor 42 commanding the adjustment of adjuster mechanism 24.

Because each particular embodiment (design) of a brake will have its own particular operating characteristic and in particular its own desired released running clearance, the processor associated with that particular design of brake will be programmed with the characteristics (function) of that design. It is therefore important that a braking system as a whole has components which comply with the specifications originally programmed into the system by the manufacturer. This is of particular importance where the braking actions and conditions are monitored to adjust braking performance and running clearance and to estimate the remaining life of components.

The system described above with reference to Figures 1 to 4 therefore provides a braking system including an actuator, in adjustment mechanism 24, which can be actuated to control a running clearance between a friction element, such as a pad or shoe, of a brake or braking assembly, and a corresponding friction surface, such as a rotor, disc or drum of the braking assembly.

The system illustrated in the preceding figures can also be adapted to improve efficiencies in the maintenance procedures of a braking system. Generally, the adjustment of the running clearance in a braking system, particularly those which are mechanically actuated, the pad replacement process requires a technician to mechanically and manually wind back a mechanical adjustment mechanism to allow sufficient clearance for the brake pad to be removed from a caliper. After replacement of the friction element such as a brake pad, either with the same or a new brake pad, it is also a manual process that is required to set a desired running clearance. These processes can be both time consuming, require significant manual labour, which is an additional cost in the maintenance procedure, and is also subject to human error, since the manual adjustment is often carried out by eye by the technician. Accuracy of the adjustment therefore depends on the training and experience and attention to detail of the technician in question. In such critical systems as braking systems, this can introduce undesirable risk to the correct functioning of the braking system.

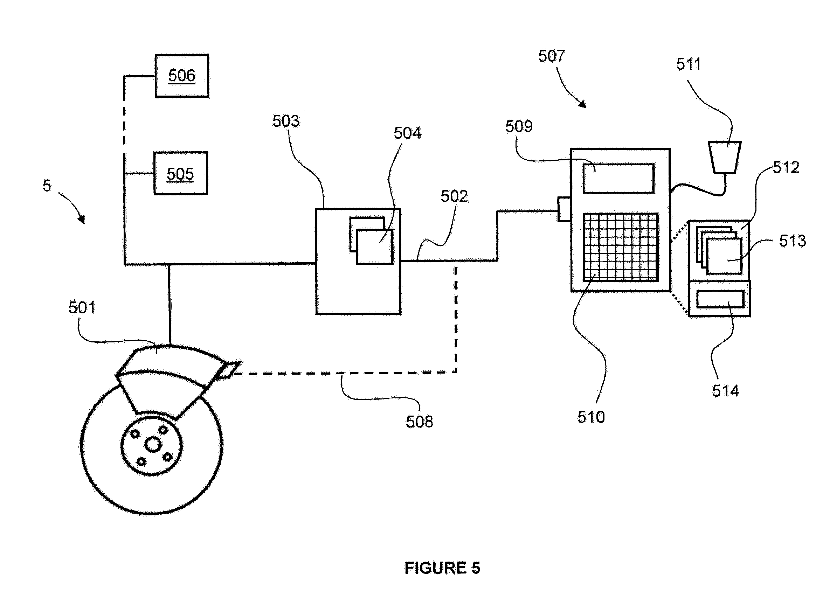

The invention therefore describes a system and a related method for automatically adjusting the running clearance using a controller. The method of the invention may be carried out in a controller integral to the braking system, or integral to a vehicle or machinery into which the braking system is integrated. It may also be carried out in a separate controller or diagnostic device, which is temporarily connected to the system for temporary reasons, such maintenance or repair. An example of such a device, connected into a system of the invention, is illustrated in Figure 5. The system 5 includes a brake 501, which may be connected to a CAN bus 502 of the system 5 via data connection to the CAN bus 502, although it is not essential that the brake be connected electronically to the CAN bus, the brake and CAN bus may simply be separate parts of the same machinery or vehicle. The CAN bus 502 is connected to a controller 503, which may contain a database 504 carrying data relating to various parameters of the system and of the vehicle or machinery to which it is installed. The CAN bus may include further connections to other parts of the vehicle or machinery, such as engine management systems 505, and safety systems 506. The brake can also be connected to other control systems such as electrical, hydraulic or pneumatic control and power input systems. The method of the present invention can therefore comprise monitoring signals in the form of data on the CAN bus, or in the form of electrical currents and hydraulic or pneumatic flows or pressures supplied to elements of the brake, such as the adjuster mechanism 24, directly.

An electronic diagnostic tool, which may be a specifically created electronic device 507, or a programmable computer carrying appropriate software and connections, can be connected to the CAN bus controller 503 directly, or via CAN bus 502.. When connected to the CAN bus controller 503, the diagnostic tool 507 can query the CAN bus to obtain data representing signals relating to operation of the brake 501. These data can be used in the present invention as the monitored signals for adjusting the running clearance if desired. In an alternative arrangement, the diagnostic tool 507 may alternatively or additionally be connected directly to the brake 501 by a connection indicated by line 508. In this case the diagnostic tool can provide direct control signals and/or power to the brake to actuate the first and second actuators in accordance with the methods of the invention described herein.

The diagnostic tool 507 may include a screen 509 for displaying information to a user, a keypad 510 for manual data input and a scanning device 511 for reading codes from replacement parts, or from the vehicle or machinery on which the brake is installed. The codes identifying the vehicle, machinery or replacement parts can enable the controller to determine the necessary thresholds and distances for retracting the actuator, to provide sufficient distance for removing the friction element, or to set the required running distance for operation. The device 507 may include a memory 512. The memory 512 may include a computer program product 514 of the invention, for execution by a controller or processor in the device 507, to carry out the methods of the invention described herein, as will be apparent in reading the following description of the methods of the invention.

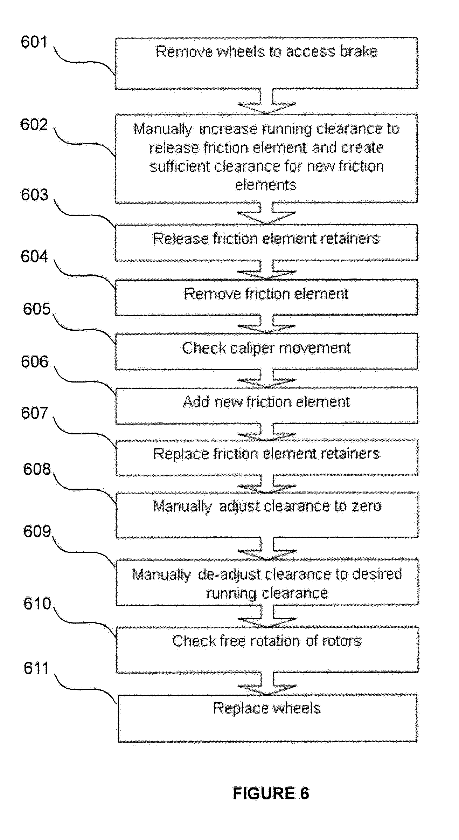

A typical known brake pad replacement process is illustrated in Figure 6. The key steps are illustrated in the figure, but additional steps may also be present. For example, before beginning the process illustrated in the Figure, it may be necessary for a technician to release the parking brake and/or to set a control system into a maintenance mode. This may involve a sequence of steps, such as setting the ignition key to a certain position, operating a further input, such as a brake actuator, and setting the key to a second position to activate the maintenance function. Mud guards may need to be removed and brake components vacuumed to remove brake dust.

In illustrated step 601, wheels are removed to allow access to the brake by the technician.

In step 602, the technician manually adjusts a running clearance to allow the friction element to be removed from the braking system, such as from a caliper of a disc braking system. This may be typically carried out by turning an adjustment screw.

In step 603, further friction element retainers, which mechanically retain the friction element in place, may be removed.

In step 604, the friction element is removed from the braking system.

In step 605, the correct movement of a brake caliper may be checked to ensure that the system is free to move the friction elements appropriately and is therefore suitable for further service.

In step 606, a new replacement friction element is placed in the braking system, preferably being a pad inserted into a caliper, in the case of a disc and caliper based braking system.

In step 607, friction element retainers are replaced to mechanically retain the friction element in place in the caliper.

In step 608, the technician manually adjusts the running clearance down to zero. This can be achieved by tightening an adjustment screw as far as is possible until resistance is met, indicating the running clearance has reached zero and, e.g. the pad is in contact with the disc.

In step 609, the technician manually de-adjusts the clearance to provide the desired running clearance.

In step 610 the technician checks that the rotors, such as discs or hubs of the brake system are free to rotate, having sufficient a running clearance.

In step 611, the wheels are replaced and any guards or other parts removed to enable the maintenance are put back in place. If on a vehicle, then a parking brake may be reapplied at this point.

Key parts of the described process which involve significant manual input are steps 602 and 608 to 610. The automated running clearance setting method enabled by the invention as described in the following can remove those steps and so reduce the time and amount of manual labour required for the maintenance process.

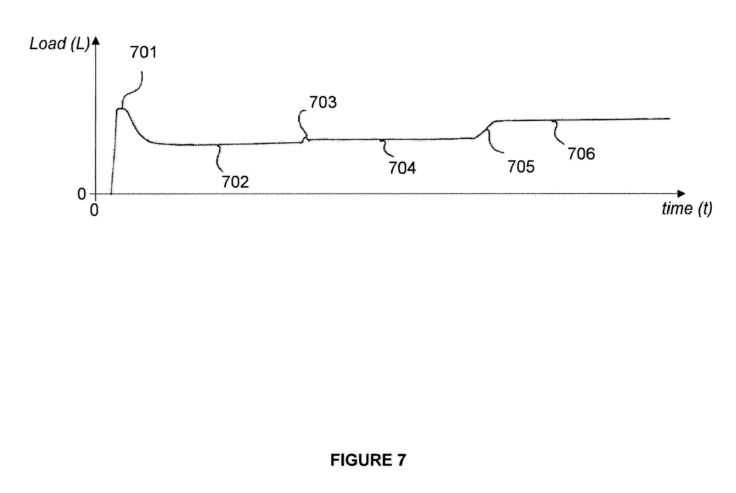

In devising the present invention, the inventors have studied the current drawn by an electric motor of the adjustment mechanism 24 described in relation to Figures 1 to 4, when driving a friction element towards a rotor of the braking system to reduce the running clearance. An example of the types of variation which can be found in the motor current during this process is shown in Figure 7.

When the motor is activated to advance the friction element, an initial peak 701 is seen when the motor first starts to move. After this peak, the motor current drops to a substantially steady state indicated by substantially straight portion 702. Considering the example of a brake pad in a caliper and pad based system, if the adjuster mechanism is not in contact with the pad when the motor is first started, then a second, minor peak 703 may be seen when the adjustor first contacts the pad. This will often be the case when a pad has been newly installed in the system. The current then continues at a substantially steady state during section 704, once the friction element is advanced towards the corresponding friction surface. This latter current level 704 may be substantially the same or slightly higher than the initial current during period 702. A further rise in the current 705 will be seen when the friction element contacts the corresponding friction surface (i.e. the brake pad contacting the rotor or disc in the example of a disc and caliper based braking system) until a peak steady state current level 706 is reached. This occurs as the motor is prevented from moving by the contact of the friction element with the corresponding friction surface when the running clearance is reduced to zero. As will therefore be appreciated from this description, the current drawn by the motor used to adjust the running clearance can therefore provide a signal indicative of a load on the motor. Although in the illustrated example, it is the current of an electric motor in the system which provides this indicative signal, it will be appreciated that other signals provided to different types of actuator could also provide a signal indicative of a load on the actuator. For example, in a hydraulic or pneumatic system, a hydraulic or pneumatic pressure may be indicative of a load on the actuator. Similarly, strain gauges could be used in a mechanical system to provide a signal indicative of a load on an adjuster mechanism for adjusting a running clearance of a braking system.

Such a signal indicative of a load on an actuator can then be monitored and a series of logic steps applied to the signal value can be used to determine when the running clearance has been reduced to zero. The following describes examples of methods which can be used.

It is possible to carry out a pre-check of the pad status with respect to its running clearance. This can enable the current wear-condition of the pad to be checked.

To carry out this check, the following steps may be implemented:

### 1a) Read the actuator load when initiating actuator movement

1b) If the friction element is in contact with the rotor, then a high steady state motor current 706 will be detected. In this case, the actuator can immediately be retracted by a predetermined amount to set a running clearance. This may be a running clearance sufficient to enable normal operation of the system, or a release running clearance, which is sufficient to release the brake pad to be removed from the system. Once retracted, a value relating to the motor position can be set to zero once the friction element is withdrawn away from the friction surface. In the alternative, if the pad is determined to be moving freely and not pressing against the corresponding friction surface, then a pad-replacement clearance-setting function can be initiated.

The pad replacement clearance-setting function can be used to set either:
a) a running clearance sufficient for removal of worn pads and replacement of the same worn pads in the system; or
b) a running clearance sufficient to allow removal of worn pads and their replacement with new pads; or
c) a running clearance set at a chosen gap as required for the braking system in question. The method for implementing this function can involve some or all of the following steps:

### 2a) Determining the initial current peak and ignore or store this occurrence:

i) Command forward actuator movement (to close the running clearance gap) and record the load value.
ii) Check the actuator position value from an actuator position indicating signal.
iii) Count the first peak and store or ignore the first peak based upon the following algorithm:

Store the peak if:
Actuator load ≥ zero-running-clearance actuator load (i.e. load indicated when RC = 0)
AND
Change in actuator position > set running clearance (as set in step 1b above i.e. actuator is moving)
AND
after T1 seconds
0 < actuator load < zero-running-clearance actuator load
Then
Peak count = 1

The above process checks for an initial high actuator load, established at 701 when the actuator starts moving, based on detection of the actuator load being higher than a first threshold, the actuator position being advanced relative to its initial position (i.e. moving), and the actuator load, after a set time threshold, being less than the initial threshold and greater than zero, or alternatively greater than a predetermined lower threshold.

### 2b) Determining the second current peak and resetting the actuator position

In this part of the process, the actuator load value and the actuator position value are both checked, then the actuator position is reset once the running clearance is zero, in accordance with the following logic:
If:
Lower load threshold (optionally zero) < current actuator load < zero-running-clearance actuator load
AND
Change in actuator position ≤ actuator movement threshold (a distance defined as a minimum movement increment of the actuator)
AND
actuator load after T2 seconds ≥ zero-running-clearance actuator load
AND
Peak count = 1
THEN
RC (Running Clearance) = 0
AND
Actuator base position value = 0 (actuator base position is reset to zero)

The above process determines when the running clearance has reached zero after the initial peak and then sets the base actuator position to zero. This value can then be used as a reference to determine wear of the pad during its life in the system.

2c) Once running clearance is zero and the motor position has been reset to zero, then the actuator is retracted by a fixed predetermined distance. This distance is, in the case of friction elements, such as brake pads being replaced with new friction elements, set at a distance sufficient to leave the friction elements free to be removed and a large enough running clearance to allow new pads to be inserted, which may have a greater thickness than a thickness of the removed pads.

Once friction elements are replaced in the braking system, then the above process can be repeated. However, in the second instance, the amount by which the actuator is retracted in step 2c) is set as the chosen operational target running clearance, i.e. the running clearance during normal use which can be set to a chosen design value for systems, according to the best performance parameters of the system.

As will be appreciated, a first carrying out of the installation and calibration methods for setting the required clearance, allow one series of steps to be carried out to determine where the zero running clearance point is, and then a second series of steps to be carried out for retracting the actuator by a sufficient amount for the friction element or elements to be removed from the braking system. The retraction may also be by a sufficient distance to allow a new replacement friction element to be installed in the system.

After placing a new friction element in the system, or re-installing a partially worn element in the system, a second carrying out of the method can then allow the brakes to be applied, in effect, by running the running clearance down to zero, and then the running clearance can be set, by retraction of the actuator, at a chosen gap as required for the braking system in question.

The advantages of using this system can include eliminating the risk of incorrect running clearance being manually set after friction elements have been replaced and the overall time taken to carry out friction element removal and replacement is reduced, which can result in labour and related cost and time savings. Further, the carrying out of the process in an automated way in a controller can be more repeatable and more reliable, improving overall safety of vehicles which are maintained according to the methods described herein.

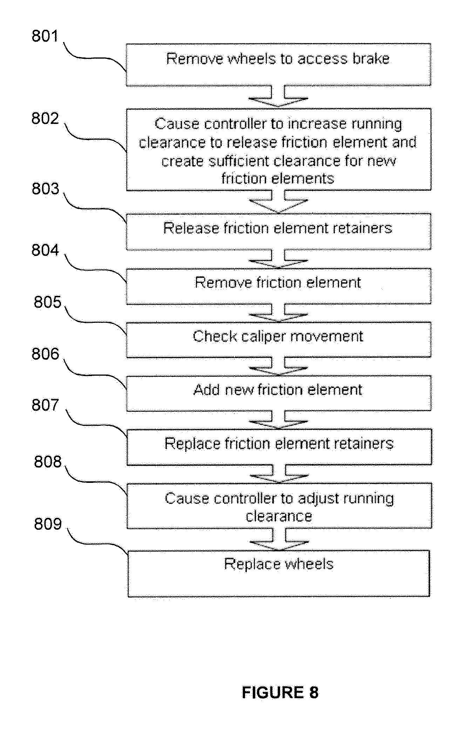

Figure 8 shows a revised maintenance process, which includes less operator steps than that shown in Figure 6, due to the implementation of the running clearance adjustment methods described herein.

Step 801 involves the same process as step 601, and the same preliminary steps described in relation to Figure 6 may also be carried out. Step 802 includes causing a controller to adjust the running clearance to release a friction element from the braking system, and may include any or all of the steps described above and the logic applied in relation to the above description of Figure 6. This automated process can be carried out quickly and without the need for additional tools, so can speed up the overall process and reduce the burden on a technician carrying out maintenance.

Steps 803 to 807 are essentially the same as steps 603 to 607 described in relation to Figure 6.

Step 808 allows steps 608 to 610 of Figure 6 to be replaced by the automated running clearance adjustment process described herein. This again reduces the need for tools and can be carried out rapidly and repeatably, reducing the burden on technicians and improving reliability of the process. The final step 809, is the same as the final step described in relation to Figure 6.

It can therefore be appreciated that the overall maintenance procedure for the braking system can be simplified using the method of the present invention and the advantages described above can all be realised. The setting of the running clearance to a target operational value according to the methods described herein may be initiated automatically once a technician or driver switches on the ignition of machinery or a vehicle to which the braking system is applied. Such a calibration or setting of running clearance could also be carried out each time the ignition or a control system of vehicle or machinery is switched on, to ensure that the braking systems are correctly calibrated with an appropriate running clearance before every use of the vehicle or machinery. This would again improve overall safety of the vehicle or machinery. As described in relation to Figure 5, the methods may be carried out in a controller of the vehicle or machinery to which the braking system is applied, or may alternatively be carried out in a separate diagnostic device, which may be an electronic controller, computer or programmable device.

Although the invention has been described above with reference to one or more preferred embodiments, it will be appreciated that various changes or modifications may be made without departing from the scope of the invention as defined in the appended claims.

## Claims

1. A method of setting a running clearance between a friction element of a braking system and a corresponding friction surface of the braking system, comprising the steps of:
providing a first actuator for applying the brake and a second actuator for adjusting a running clearance of the brake;
causing the second actuator to advance the friction element toward the friction surface;
monitoring, in a controller, a signal indicative of a load on the second actuator, to detect a peak in the signal indicative of a point of zero running clearance between the friction element and the friction surface; and
retracting the actuator by a predetermined distance.

2. The method of claim 1, wherein the actuator is an electric motor and wherein the signal indicative of the load on the actuator is preferably a current provided to the motor.

3. The method of claim 1 or claim 2, comprising detecting a first peak in the signal upon actuation of the actuator and detecting a second peak in the signal indicative of the point of zero running clearance between the friction element and the friction surface.

4. The method of any of the preceding claims, further comprising, prior to advancing the actuator, reading the signal to determine whether a point of zero running clearance has already been reached.

5. The method of any of the preceding claims, further comprising retracting the actuator to permit removal and/or replacement of a friction element of the braking system.

6. The method of any of the preceding claims, comprising the steps of:
monitoring the signal of claim 1 as a first signal;
monitoring a second signal, indicative of a position of the actuator; and
recording that a first signal peak has occurred once it is determined that:
the first reaches a value greater than a first threshold value; and
the actuator is determined to be moving, via the second signal; and
after a predetermined time threshold, the signal is less than the first threshold value and greater than a second threshold value.

7. The method of any of the preceding claims, further comprising the steps of:
monitoring the signal of claim 1 as a first signal;
monitoring a second signal, indicative of a position of the actuator; and
recording that a second signal peak has occurred once it is determined that:
the first signal is less than a first threshold value and greater than a second threshold value, lower than the first threshold value;
the actuator is determined not to be moving, via the second signal;
the first signal is determined to be more than a further threshold value after a predetermined time threshold; and
the first peak is preferably determined to have already occurred.

8. The method of any preceding claim, further comprising the step of setting a recorded running clearance to a base value, preferably zero; and
setting a recorded base actuator position to a base value, preferably zero.

9. The method according to any preceding claim, further comprising one or more of the steps of:
causing the actuator to retract by a first distance sufficient to allow removal of a friction element; and/or
causing the actuator to retract by a second distance sufficient to allow replacement of a worn friction element with an unworn friction element; and/or
causing the actuator to retract by a third distance set as an operating running clearance of the brake system;
wherein the retracting step or steps is or are preferably carried out after the running clearance and actuator position have been set to respective base values.

10. A method according to any of the preceding claims, further comprising monitoring a signal indicative of a load on the second actuator.

11. A braking system, comprising a braking assembly, the braking assembly comprising an actuator for adjusting a running clearance of the braking system, and a controller arranged to carry out the method steps carried out by the controller of any of the preceding claims.

12. A braking system according to claim 11, comprising a first, preferably mechanical, actuator for applying the brake and a second, preferably electrical, actuator for adjusting a running clearance of the brake.

13. A method of maintenance of a braking system, comprising the steps of causing a controller to carry out the method steps of the controller of any of claims 1 to 10 to set the initial running clearance, the controller preferably being one of:
an integral part of the braking system or of a vehicle or machinery to which it is installed; or
a separate electronic diagnostic device for connection to the braking system for maintenance.

14. A controller configured to carry out the method steps of the controller of any of claims 1 to 10.

15. A computer program product comprising instructions which, when executed by a controller, cause the controller to perform the method steps of the controller of any of claims 1 to 10.
